# EUROPÄISCHE PATENTSCHRIFT

(11) **EP 1 726 348 B1**
(45) Veröffentlichungstag und Bekanntmachung des Hinweises auf die Patenterteilung: **01.01.2014**
(21) Anmeldenummer: 06009286.3
(22) Anmeldetag: 05.05.2006
(51) Int. Cl.: B01D 46/00, B01D 46/10, B01D 46/12, B01D 46/52, F24F 13/28

(54) **Filtereinheit und Filterelement**
Filter unit and filter element
Unité de filtre et elément filtrant

(30) Priorität: 25.05.2005 DE 202005008255 U
(43) Veröffentlichungstag der Anmeldung: 29.11.2006
(73) Patentinhaber: Handte Umwelttechnik GmbH, 78532 Tuttlingen (DE); TRUMPF Werkzeugmaschinen GmbH + Co. KG, 71254 Ditzingen (DE)
(72) Erfinder: Handte, Jacob, 8274 Gottlieben (CH); Meyer, Ingo, 88131 Lindau (DE)
(74) Vertreter: Jackisch-Kohl, Anna-Katharina

(56) Entgegenhaltungen:
- DE-A1- 19 804 452
- FR-A- 2 741 568
- FR-A- 2 775 635
- FR-A- 2 815 699
- FR-A- 2 824 023
- US-A- 3 830 042
- US-A- 4 328 859
- US-A1- 2002 029 549

## Beschreibung

Die Erfindung betrifft eine Filtereinheit nach dem Oberbegriff des Anspruches 1 bzw. 2 sowie ein Filterelement nach dem Oberbegriff des Anspruches 10.

Es sind Filterelemente bekannt, auf deren Kopf eine U-förmige Schiene aufgesetzt wird. Die Schiene steht über den Filterkopf über und weist in diesem Bereich Durchgangsöffnungen für Gewindebolzen auf, die am Träger vorgesehen sind. Auf die über die Schiene überstehenden Enden der Gewindebolzen werden Muttern geschraubt, mit denen die Schiene und damit der Filterkopf gegen den Träger gedrückt werden. Die Montage des Fliterelementes ist aufgrund der Vielzahl von benötigten Bauteilen aufwändig und schwierig.

Bei der gattungsgemäßen Filtereinheit (US-A-3 830 042) stehen vom Träger für die Filterelemente Gewindestifte ab, die bei montierten Filterelementen durch Öffnungen des rahmenförmigen Kopfes der Filterelemente ragen und auf die unter Zwischenlage von Dichtungen Befestigungselemente geschraubt werden. Die Öffnungen im rahmenförmigen Kopf bilden die Formschlusselemente, die mit den Gewindestiften des Trägers als Gegenformschlusselemente zusammenwirken. Durch Anziehen der Befestigungselemente wird der rahmenförmige Kopf der Filterelemente am Träger verspannt. Der Träger ist mit mehreren nebeneinander liegenden Öffnungen für die Filterelemente versehen, die jeweils auf diese Weise am Träger befestigt werden.

Es ist weiter eine Filtereinheit bekannt (US 2002100029549 A1), die in eine Welle eingesetzt wird. Der Träger hat quer abstehende Zapfen mit kugelförmigen Verbreiterungen, die in Vertiefungen einer Abdeckplatte einschnappen, die den Filterrahmen des Filterelementes abdeckt. Die Abdeckplatte liegt unter Zwischenlage von Dichtungen am Träger sowie am Filterrahmen an.

Bei einer weiteren bekannten Filtereinheit (DE 198 04 452 A1) untergreifen Verriegelungsnasen in der Einbaulage einen nach innen gebogenen Rand des Trägers eines Deckels des Filterelementes.

Es ist weiter bekannt (FR-A-2 775 635), das Filterelement mit einem Kopf zu versehen, der blendenförmig ausgebildet ist und unter Zwischenlage einer Dichtung am Rand einer Einbauöffnung eines Trägers für das Filterelement anliegt.

Der Erfindung liegt die Aufgabe zugrunde, die gattungsgemäße Filtereinheit und das gattungsgemäße Filterelement so auszubilden, dass bei einfacher konstruktiver Ausbildung eine problemlose Montage möglich ist.

Diese Aufgabe wird bei der gattungsgemäßen Flitereinheit erfindungsgemäß mit den kennzeichnenden Merkmalen des Anspruches 1 bzw. 2 und beim gattungsgemäßen Filterelement erfindungsgemäß mit den kennzeichnenden Merkmalen des Anspruches 10 gelöst.

Der Kopf des Filterelementes der erfindungsgemäßen Filtereinheit nach Anspruch 1 ist mit dem Formschlusselement versehen, mit dem sich das Filterelement einfach in die genaue Einbaulage bringen lässt. Dadurch gestaltet sich der Einbau des Filterelementes einfach und problemlos. Das Formschlusselement ist eine randseitige Vertiefung an einander gegenüberliegenden Seiten des Kopfes des Filterelementes. Die Vertiefung lässt sich einfach am Kopf des Filterelementes vorsehen. Das Formschlusselement wirkt mit einem trägerseitigen Gegenformschlusselement zusammen, so dass eine problemlose Ausrichtung des Filterelementes gegenüber dem Träger beim Einbau gewährleistet ist. Das Gegenformschlusselement greift in die gegenüberliegenden Formschlusselemente benachbarter Köpfe der benachbarten Filterelemente ein. Das für die benachbarten Köpfe gemeinsame Gegenformschlusselement ermöglicht eine hohe Packungsdichte der Filterelemente in der Filtereinheit. Mit dem Spannelement werden gleichzeitig die Köpfe zweier benachbarter Filterelemente übergriffen und am Träger verspannt.

Der Träger ist mit wenigstens einem Kraftaufnahmeteil versehen, auf das das die Köpfe benachbarter Filterkörper übergreifende Spannelement aufgesetzt ist. Es wird mittels des Befestigungselementes gegen das Kraftaufnahmeteil verspannt, mit dem die Kraft, die vom Befestigungselement bei der Montage des Filterelementes ausgeübt wird, begrenzt wird. Dadurch ist in sehr einfacher und dennoch wirkungsvoller Weise sichergestellt, dass die vom Befestigungselement ausgeübte Kraft nicht so hoch wird, dass der Kopf des Filterelementes beschädigt oder gar zerstört wird. Dadurch ist die Montage der Filtereinheit auch von weniger geübten Kräften ohne weiteres möglich, da eine zu hohe Kraft durch das Befestigungselement vom Kraftaufnahmeteil aufgenommen und in den Träger geleitet wird.

Die erfindungsgemäße Filtereinheit nach Anspruch 2 ist so ausgebildet, dass die Köpfe der Filterelemente an ihren einander gegenüberliegenden Seiten die Formschlusselemente in Form der randseitigen Vertiefungen aufweisen. In die gegenüberliegenden Formschlusselemente benachbarter Köpfe greift ein gemeinsames Gegenformschlusselement ein, das auf das trägerseitige Kraftaufnahmeteil gesteckt ist und auf das das die Köpfe benachbarter Filterkörper übergreifende Spannelement aufgesetzt wird. Es wird mittels des Befestigungselementes gegen das Kraftaufnahmeteil verspannt, das die vom Befestigungselement erzeugte Kraft begrenzt.

Das erfindungsgemäße Filterelement zeichnet sich dadurch aus, dass in den Rahmenseiten seines rahmenförmigen Kopfes eine randseitige Vertiefung vorgesehen ist, die das Formschlusselement bildet.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung eine Filtereinheit mit erfindungsgemäßen Filterelementen,
- Fig. 2: eine Seitenansicht der Filtereinheit gemäß Fig. 1,
- Fig. 3: eine Vorderansicht der Filtereinheit gemäß Fig. 1,
- Fig. 4: einen Schnitt längs der Linie A-A in Fig. 3,
- Fig. 5: in vergrößerter Darstellung die Einzelheit Z in Fig. 4,
- Fig. 6: in vergrößerter Darstellung und im Schnitt einen Kopf des erfindungsgemäßen Filterelementes.

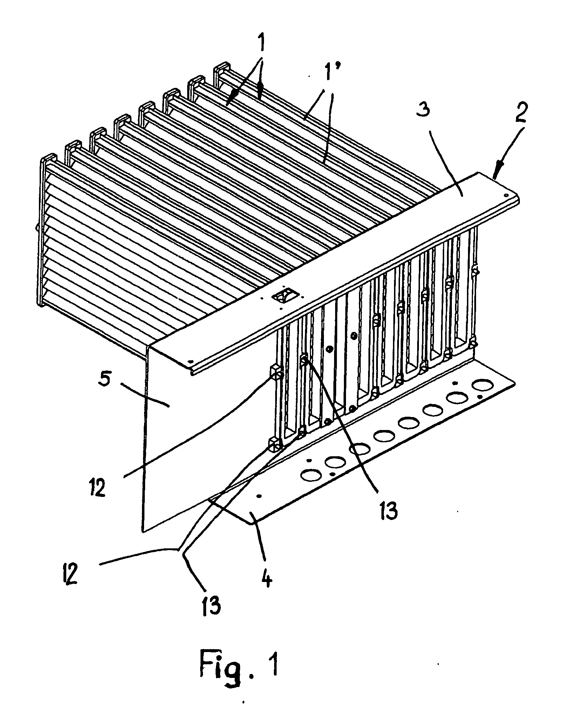

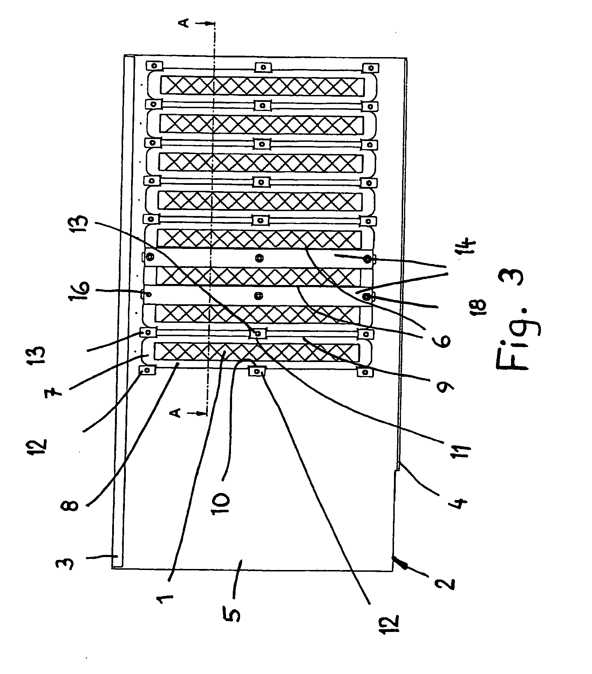

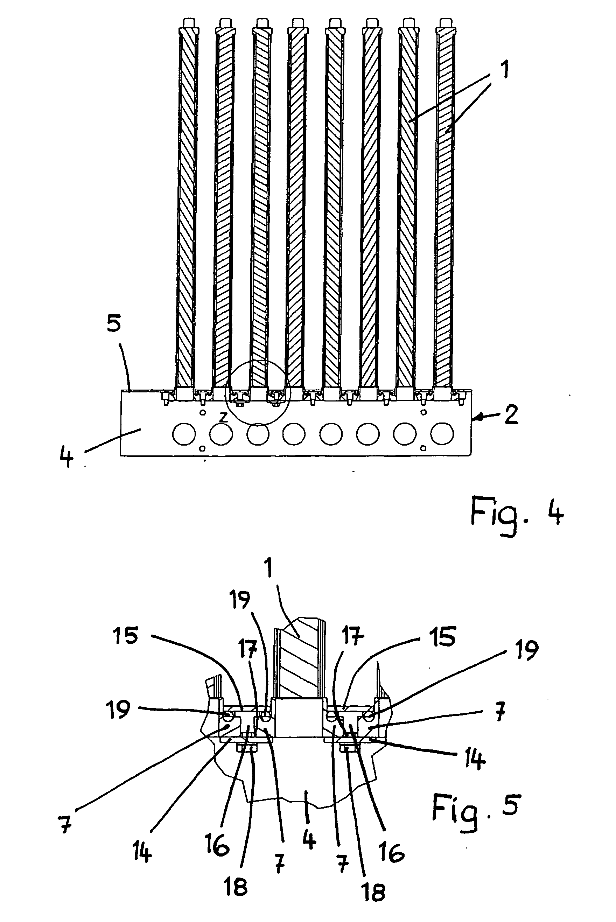

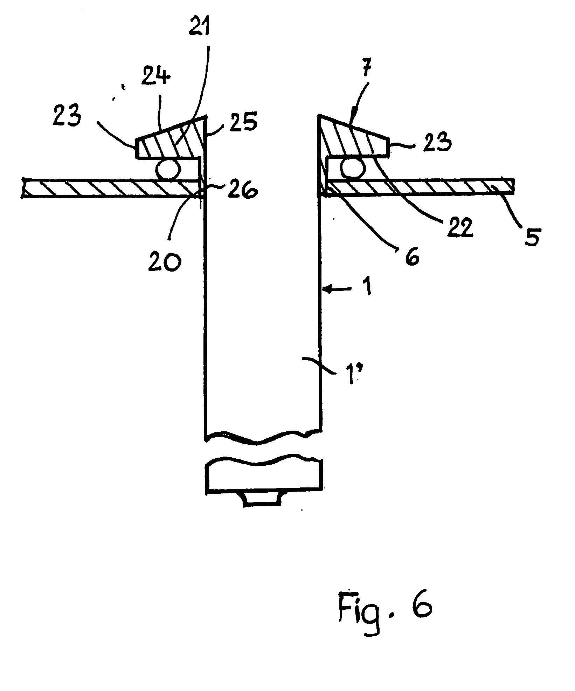

In Fig. 1 ist eine Filtereinheit dargestellt, mit der Stäube jeglicher Art gefiltert werden können. Die Filtereinheit weist mehrere Filterelemente 1 mit Filterkörpern 1' auf, die mit geringem Abstand parallel nebeneinander an einem Träger 2 befestigt sind. Er ist als etwa C-förmige Schiene ausgebildet und hat zwei einander gegenüberliegende Schenkel 3, 4, die durch einen senkrecht zu ihnen liegenden Steg 5 miteinander verbunden sind. Der Steg 5 weist mit Abstand nebeneinander liegende Stecköffnungen 6 auf, durch welche die Filterelemente 1 ragen. Die Stecköffnungen 6 sind an die Querschnittsform der Filterelemente 1 angepasst, die im Ausführungsbeispiel rechteckigen Umriss haben. Auf den Filterkörpern 1' sitzt jeweils ein Kopf 7, der mit einem Hals 20 (Fig. 6) durch die Stecköffnung 6 ragt (Fig. 5) und am Steg 5 des Trägers 2 gehalten wird. Im Ausführungsbeispiel hat der Filterkopf 7 rechteckigen Umriss (Fig. 3) und ist an seinen beiden Längsseiten 8, 9 in halber Länge mit jeweils einem Formschlusselement in Form einer randseitigen Vertiefung 10, 11 versehen, die vorzugsweise rechteckigen Umriss hat. In die Vertiefungen 10, 11 des Filterkopfes 7 greift jeweils ein Gegenformschlusselement 12, 13 ein, das auf dem Steg 5 des Trägers 2 befestigt ist. Die Gegenformschlusselemente 12, 13 sind beispielhaft quaderförmige Klötze, die auf den Steg 5 des Trägers 2 aufgeschraubt sind. Durch die Gegenformschlusselemente 12, 13 ist sichergestellt, dass die Köpfe 7 der Filterelemente 1 bei der Montage am Träger 2 einwandfrei ausgerichtet sind.

Wie sich aus Fig. 3 ergibt, ist der Abstand zwischen den benachbarten Köpfen 7 der Filterelemente 1 so groß, dass ein Gegenformschlusselement 13 in die Vertiefungen 10, 11 zweier benachbarter Köpfe 7 eingreifen kann. Auf diese Weise werden mit einem Gegenformschlusselement 12, 13 zwei Köpfe 7 fixiert. Dadurch können die Filterelemente 1 eng benachbart nebeneinander vorgesehen werden, so dass die Filtereinheit bei vorgegebener Querschnittsgröße eine große Zahl von Filterelementen 1 aufweisen kann.

Je nach Größe des Kopfes 7 können mehrere Vertiefungen 10, 11 und dementsprechend mehrere Gegenformschlusselemente 12, 13 für jeden Kopf 7 vorgesehen sein. Die Vertiefungen 10, 11 können selbstverständlich jede geeignete Umrissform haben, die eine einwandfreie Lageausrichtung des Kopfes 7 am Steg 5 des Trägers 2 gewährleistet. Entsprechend der Form der Vertiefungen 10, 11 haben die Gegenformschlusselemente 12, 13 eine entsprechende Umrissform. Vorteilhaft sind die Gegenformschlusselemente 12, 13 lösbar am Trägersteg 5 befestigt, so dass sie bei Verschleiß und/oder Beschädigung einfach ausgewechselt werden können.

Um die Filterelemente 1 mit ihren Köpfen 7 am Träger 2 sicher befestigen zu können, sind Spannelemente 14 vorgesehen, mit denen die Köpfe 7 einfach und dennoch zuverlässig fest am Steg 5 gehalten werden können. Wie sich aus Fig. 3 ergibt, werden die Köpfe 7 in ihren Eckbereichen mit jeweils einem Gegenformschlusselement 12, 13 gehalten. Zwischen den Stecköffnungen 6 des Steges 5 befinden sich schmale Streifen 15, die durch Teile des Steges 5 des Trägers 2 gebildet und auf denen mit Abstand voneinander Kraftaufnahmeteile 16 befestigt sind. Wie Fig. 5 zeigt, sind die Kraftaufnahmeteile 16 durch auf dem Steg 5 befestigte, vorzugsweise aufgeschweißte Bolzen gebildet. Sie haben jeweils einen umlaufenden Absatz 17, so dass das freie Ende der Kraftaufnahmeteile 16 im Durchmesser verjüngt ist. Auf dieses verjüngte Ende der Kraftaufnahmeteile 16 wird eine Mutter 18 geschraubt, mit der die Spannelemente 14 auf den Kraftaufnahmeteilen 16 gehalten werden. Die Köpfe 7 der Filterelemente 1 liegen unter Zwischenlage wenigstens einer Ringdichtung 19 am Steg 5 des Trägers 2 an (Fig. 5 und 6). Die Ringdichtung 19 wird durch den Kopf 7 der Filterelemente 1 in montierter Lage elastisch zusammengedrückt. Wie sich aus Fig. 5 ergibt, werden mit jedem Spannelement 14 zwei benachbarte Köpfe 7 gehalten. Die Spannelemente 14 sind so breit, dass sie die benachbarten Längsseiten 8, 9 der benachbarten Köpfe 7 nahezu vollständig in der Breite überdecken. Auf diese Weise werden die Köpfe 7 einwandfrei am Träger 2 verspannt.

Durch den Absatz 17 der Kraftaufnahmeteile 16 ist sichergestellt, dass die Köpfe 7 der Filterelemente 1 nicht durch ein zu starkes Anziehen der Muttern 18 beschädigt oder gar zerstört werden können. Die Dicke der Köpfe 7 ist so auf die Kraftaufnahmeteile 16 abgestimmt, dass die Spannelemente 14 vor einer Beschädigung oder gar Zerstörung der Köpfe 7 am Absatz 17 der Kraftaufnahmeteile 16 zur Anlage kommen. Dadurch wird bei einem weiteren Anziehen der Muttern 18 die von ihnen ausgeübte Kraft über die Kraftaufnahmeteile 16 in den Steg 5 des Trägers 2 geleitet, so dass diese übermäßige Druckspannung nicht auf die Köpfe 7 wirkt.

Die Spannelemente 14 können blockförmig, plattenförmig oder in anderer Weise ausgebildet sein. Da die Köpfe 7 der Filterelemente 1 an allen vier Ecken mit den Spannelementen 14 gegen den Steg 5 des Trägers 2 verspannt werden, werden die Köpfe 7 und damit die Filterelemente 1 einwandfrei am Träger 2 gehalten. Darüber hinaus können weitere Spannelemente längs des jeweiligen Kopfes 7 vorgesehen sein. Eine solche Ausbildung bietet sich dann an, wenn die Köpfe 7 größere Längserstreckung haben, als im Ausführungsbeispiel dargestellt ist.

Auch im Bereich der Gegenformschlusselemente 12, 13 können entsprechende Spannelemente 14 vorgesehen sein. Die Gegenformschlusselemente 12, 13 werden in diesem Fall auf die bolzenförmlgen Kraftaufnahmeteile 16 so gesteckt, dass sie in die Vertiefungen 10, 11 der Köpfe 7 eingreifen. Anschließend werden auf die freien Enden der Kraftaufnahmeteile 16 die Spannelemente 14 aufgesetzt und mit den Muttern 18 befestigt. Für die Gegenformschlusselemente 12, 13 und die Spannelemente 14 sind somit keine unterschiedlich gestalteten Kraftaufnahmeteile 16 notwendig.

Aufgrund der besonderen Gestaltung der Kraftaufnahmeteile 16 ist eine besonders einfache Montage der Filterelemente am Träger 2 gewährleistet. Beim Anziehen der Muttern 18 muss nicht auf die von der Mutter 18 ausgeübte Druckspannung Rücksicht genommen werden. Sie kann maximal angezogen werden, da das Spannelement 14 vor einer Beschädigung oder Zerstörung des Kopfes 7 am Absatz 17 des Kraftaufnahmeteiles 16 zur Anlage kommt. Die Montage der Filtereinheit ist darum auch von ungeübten Kräften einfach durchführbar.

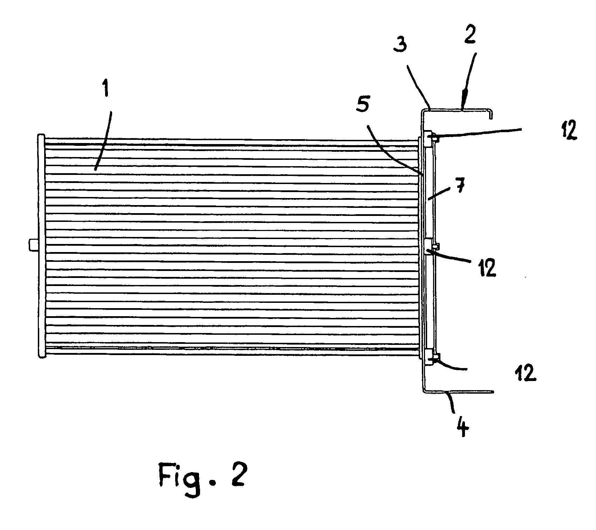

Der Träger 2 lässt sich einfach aus einem Blechteil biegen. Die Filterkörper 1' befinden sich hinter dem Steg 5 des Trägers 2, während die zugehörigen Köpfe 7 im Bereich zwischen den beiden Schenkeln 3, 4 des Trägers 2 liegen. Die Schenkel 3, 4 sind wesentlich länger als die Höhe der Köpfe 7 (Fig. 1 und 2), so dass die Köpfe 7 von den Schenkeln 3, 4 des Trägers 2 überragt werden. Dadurch gewährleisten die Schenkel 3, 4 bei eingebauter Filtereinheit einen optimalen Schutz der Köpfe 7. Mittels des Trägers 2 lassen sich die Filterelemente 1 problemlos in Maschinen, Vorrichtungen und dergleichen einbauen. Da die Spannelemente 14 und die Gegenformschlusselemente 12, 13 an der Außenseite des Steges 5 des Trägers 2 liegen, sind diese Elemente auch in eingebauter Lage bequem zugänglich, so dass die Filterelemente 1 bei Bedarf einfach abgenommen oder ausgetauscht werden können.

Die Köpfe 7 können aus jedem geeigneten Material bestehen, insbesondere aus Metall oder hartem Kunststoff.

Fig. 6 zeigt eine besonders vorteilhafte Ausbildung des Kopfes 7 des Filterelementes 1. Der Kopf 7 hat einen dünnwandigen Hals 20, der durch die Stecköffnung 6 des Trägersteges 5 ragt. An den Hals 20 schließt der Filterkörper 1' des Filterelementes 1 an. Auf der dem Filterkörper 1' gegenüberliegenden Seite des Trägersteges 5 geht der Hals 20 in ein Kopfstück 21 über, das bei montiertem Filterelement 1 unter Zwischenlage der Ringdichtung 19 am Trägersteg 5 anliegt. Das Kopfstück 21 hat eine ebene, dem Trägersteg 5 zugewandte und parallel zu ihm liegende Unterseite 22, die rechtwinklig an eine Außenseite 23 anschließt. Die ebene Stirnseite 24 des Kopfes 7 verläuft derart schräg, dass die Dicke des Kopfstückes 21 nach außen hin stetig abnimmt. Die Innenseite 25 des Kopfstückes 21 liegt in einer Ebene mit der Innenseite 26 des Halses 20.

Durch die schräg nach außen und in Richtung auf den Trägersteg 5 verlaufende Stirnseite 24 wird das Induktionsverhältnis wesentlich erhöht. Außerdem wird durch diese schräg liegende Stirnseite 24 die Wirbelbildung im Anströmbereich reduziert, wodurch die Filterwirkung erheblich verbessert wird.

## Patentansprüche

1. Filtereinheit mit mehreren nebeneinander liegenden Filterelementen (1), die einen Filterkörper (1') und einen rahmenförmigen Kopf (7) aufweisen, der mit dem Filterkörper (1') verbunden ist und mindestens ein Formschlusselement (10, 11) aufweist, das mit einem Gegenformschlusselement (12, 13) zusammenwirkt, das an einem Träger (2) vorgesehen ist, der nebeneinander liegende Öffnungen (6) für die Filterelemente (1) aufweist,
**dadurch gekennzeichnet, dass** die Köpfe (7) an ihren einander gegenüberliegenden Seiten (8, 9) die Formschlusselemente (10, 11) in Form von randseitigen Vertiefungen aufweisen, dass in die gegenüberliegenden Formschlusselemente (10, 11) benachbarter Köpfe (7) ein gemeinsames Gegenformschlusselement (12, 13) eingreift, das am Träger (2) gehalten ist, und dass der Träger (2) wenigstens ein Kraftaufnahmeteil (16) aufweist, auf das ein die Köpfe (7) benachbarter Filterkörper (1') übergreifendes Spannelement (14) aufgesetzt ist, das mittels eines Befestigungselementes (18) gegen das Kraftaufnahmeteil (16) verspannbar ist, das die vom Befestigungselement (18) erzeugte Kraft begrenzt.

2. Filtereinheit mit mehreren nebeneinander liegenden Filterelementen (1), die einen Filterkörper (1') und einen rahmenförmigen Kopf (7) aufweisen, der mit dem Filterkörper (1') verbunden ist und mindestens ein Formschlusselement (10, 11) aufweist, das mit einem Gegenformschlusselement (12, 13) zusammenwirkt, das an einem Träger (2) vorgesehen ist, der nebeneinander liegende Öffnungen (6) für die Filterelemente (1) aufweist,
**dadurch gekennzeichnet, dass** die Köpfe (7) an ihren einander gegenüberliegenden Seiten (8, 9) die Formschlusselemente (10, 11) in Form von randseitigen Vertiefungen aufweisen, dass in die gegenüberliegenden Formschlusselemente (10, 11) benachbarter Köpfe (7) ein gemeinsames Gegenformschlusselement (12, 13) eingreift, das auf ein Kraftaufnahmeteil (16) gesteckt ist, das am Träger (2) vorgesehen ist und auf das ein die Köpfe (7) benachbarter Filterkörper (1') übergreifendes Spannelement (14) aufgesetzt ist, das mittels eines Befestigungselementes (18) gegen das Kraftaufnahmeteil (16) verspannbar ist, das die vom Befestigungselement (18) erzeugte Kraft begrenzt.

3. Filtereinheit nach Anspruch 1 oder 2,
**dadurch gekennzeichnet, dass** der Kopf (7) eckigen Umriss hat.

4. Filtereinheit nach einem der Ansprüche 1 bis 3,
**dadurch gekennzeichnet, dass** die Formschlusselemente (10, 11) an den Längsseiten (8, 9) des Kopfes (7) vorgesehen sind.

5. Filtereinheit nach einem der Ansprüche 1 bis 4,
**dadurch gekennzeichnet, dass** das Formschlusselemente (10, 11) eckigen Umriss hat.

6. Filtereinheit nach einem der Ansprüche 1 bis 5,
**dadurch gekennzeichnet, dass** das Kraftaufnahmeteil (16) bolzenförmig ausgebildet ist.

7. Filtereinheit nach einem der Ansprüche 1 bis 6,
**dadurch gekennzeichnet, dass** das Kraftaufnahmeteil (16) einen im Querschnitt verjüngten Endabschnitt aufweist.

8. Filtereinheit nach Anspruch 7,
**dadurch gekennzeichnet, dass** auf den verjüngten Endabschnitt des Kraftaufnahmeteiles (16) das Befestigungselement (18) schraubbar ist.

9. Filtereinheit nach Anspruch 7 oder 8,
**dadurch gekennzeichnet, dass** am Übergang vom verjüngten Endabschnitt zum übrigen Teil des Kraftaufnahmeteiles (16) ein Absatz (17) vorgesehen ist, der den maximalen Verstellweg des Spannelementes (14) begrenzt.

10. Filterelement mit einem Filterkörper (1') und einem rahmenförmigen Kopf (7), der mit dem Filterkörper (1') verbunden ist und an seinen einander gegenüberliegenden Rahmenseiten (8, 9) jeweils mindestens ein Formschlusselement (10, 11) aufweist,
**dadurch gekennzeichnet, dass** das Formschlusselement (10, 11) durch eine randseitige Vertiefung in den Rahmenseiten (8, 9) gebildet ist.

11. Filterelement nach Anspruch 10,
**dadurch gekennzeichnet, dass** das Formschlusselement (10, 11) eckigen Umriss hat.

12. Filterelement nach Anspruch 10 oder 11,
**dadurch gekennzeichnet, dass** der Kopf (7) eine schräg liegende Stirnseite (24) aufweist.

13. Filterelement nach Anspruch 12,
**dadurch gekennzeichnet, dass** die Stirnseite (24) eben ist.

14. Filterelement nach einem der Ansprüche 10 bis 13,
**dadurch gekennzeichnet, dass** die Dicke des Kopfes (7) in Richtung auf seine Außenseite (23) abnimmt.

## Claims

1. Filter unit with several filter elements (1), arranged side by side, comprising a filter body (1') and a frame-shaped head (7), connected with the filter body (1') and comprising at least one form-fitting element (10, 11), which interacts with a counter form-fitting element (12, 13), provided at a support (2), comprising side by side arranged openings (6) for the filter elements (1),
**characterised in that** the heads (7) comprise the form-fitting elements (10, 11) at its sides (8, 9) opposite to each other in the form of recesses at the edge, that a common counter form-fitting element (12, 13) engages into the opposite form-fitting elements (10, 11) of adjacent heads (7), which is held at the support (2), and that the support (2) comprises at least one force transducer element (16), onto which a clamping element (14), which overlaps the heads (7) of adjacent filter bodies (1') is placed and which can be braced against the force transducer element (16) by means of a fastening element (18) and which limits the force created by the fastening element (18).

2. Filter unit with several filter elements (1), arranged side by side, comprising a filter body (1') and a frame-shaped head (7), connected with the filter body (1') and comprising at least one form-fitting element (10, 11), which interacts with a counter form-fitting element (12, 13), provided at a support (2), comprising side by side arranged openings (6) for the filter elements (1),
**characterised in that** the heads (7) comprise the form-fitting elements (10, 11) at its sides opposite to each other in the form of recesses at the edge, that a common counter form-fitting element (12, 13) engages into the opposite form-fitting elements (10, 11) of adjacent heads (7) and is inserted onto a force transducer element (16), which is provided at the support (2) and onto which a clamping element (14), which overlaps the heads (7) of adjacent filter bodies (1') is placed and which can be braced against the force transducer element (16) by means of a fastening element (18) and which limits the force created by the fastening element (18).

3. Filter unit according to claim 1 or 2,
**characterised in that** the head (7) has a rectangular contour.

4. Filter unit according to one of the claims 1 to 3,
**characterised in that** the form-fitting elements (10, 11) are provided on the longitudinal sides (8, 9) of the head (7).

5. Filter unit according to one of the claims 1 to 4,
**characterised in that** the form-fitting element (10, 11) has a rectangular contour.

6. Filter unit according to one of the claims 1 to 5,
**characterised in that** the force transducer element (16) is designed with a bolt-shape.

7. Filter unit according to one of the claims 1 to 6,
**characterised in that** the forcetransducer element (16) comprises an end tapering in the cross-section.

8. Filter unit according to claim 7,
**characterised in that** the fastening element (18) is screwable onto the tapered end section of the forcetransducer element (16).

9. Filter unit according to claim 7 or 8,
**characterised in that** at the transition from the tapered end section to the remaining part of the forcetransducer element (16) a step (17) is provided, limiting the maximal setting range of the clamping element (14).

10. Filter element with a filter body (1') and a frame-shaped head (7), connected with the filter body (1') and comprising at its sides (8, 9) opposite to each other at least one form-fitting element (10, 11),
**characterised in that** the form-fitting element (10, 11) is formed by a recess at the edge in the sides (8, 9) of the frame.

11. Filter element according to claim 10,
**characterised in that** the form-fitting element (10, 11) has a rectangular contour.

12. Filter element according to claim 10 or 11,
**characterised in that** the head (7) comprises a tilted front side (24).

13. Filter element according to claim 12,
**characterised in that** the front side (24) is plane.

14. Filter element according to one of the claims 10 to 13,
**characterised in that** the thickness of the head (7) decreases toward its outside (23).

## Revendications

1. Unité de filtre avec plusieurs éléments filtrants (1) juxtaposés, comprenant un corps filtrant (1') et une tête (7) en forme de cadre, connectée avec le corps filtrant (1') et comprenant au moins un élément de liaison géométrique (10,11), coopérant avec un contre-élément de liaison géométrique (12, 13), prévu dans un support (2), comprenant des ouvertures (6) juxtaposées pour les éléments filtrants (1),
**caractérisée en ce que** les têtes (7) comprennent dans leurs côtés (8, 9) opposés l'un à l'autre les éléments de liaison géométrique (10, 11) en forme de cavités placés au niveau du bord, que dans les éléments de liaison géométrique (10, 11) opposés des têtes (7) avoisinantes s'engage un commun contre-élément de liaison géométrique (12, 13), fixé dans le support (2), et que le support (2) comprend au moins un récepteur de force (16), auquel est superposé un élément de serrage (14), recouvrant les têtes (7) des corps filtrants (1') avoisinants, lequel serrable à l'aide d'un élément de fixation (18) contre le récepteur de force (16), lequel limite la force crée par l'élément de fixation (18).

2. Unité de filtre avec plusieurs éléments filtrants (1) juxtaposés, comprenant un corps filtrant (1') et une tête (7) en forme de cadre, connectée avec le corps filtrant (1') et comprenant au moins un élément de liaison géométrique (10,11), coopérant avec un contre-élément de liaison géométrique (12, 13), prévu sur un support (2), comprenant des ouvertures juxtaposées pour les éléments filtrants,
**caractérisée en ce que** les têtes (7) comprennent dans leur côtés (8, 9) opposés l'un à l'autre les éléments de liaison géométrique (10, 11) en forme de cavités placés au niveau du bord, que dans les éléments de liaison géométrique (10, 11) opposés des têtes (7) avoisinantes s'engage un commun contre-élément de fermeture géométrique (12, 13), auquel est superposé un récepteur de force (17), lequel est prévu sur le support (2) et auquel est superposé un élément de serrage (14), recouvrant les têtes (7) des corps filtrants (1') avoisinants, lequel peuvent être serrées à l'aide d'un élément de fixation (18) contre le récepteur de force (16), lequel limite la force produite par l'élément de fixation (18).

3. Unité de filtre selon revendication 1 ou 2,
**caractérisée en ce que** la tête (7) comprend un contour angulaire.

4. Unité de filtre selon une des revendications 1 à 3,
**caractérisée en ce que** les éléments de liaison géométrique (10, 11) sont prévus sur les côtés longitudinaux (8, 9) de la tête (7).

5. Unité de filtre selon une des revendications 1 à 4,
**caractérisée en ce que** l'élément de liaison géométrique (10, 11) comprend un contour angulaire.

6. Unité de filtre selon une des revendications 1 à 5,
**caractérisée en ce que** le récepteur de force (16) est dessiné en forme de boulon.

7. Unité de filtre selon une des revendications 1 à 6,
**caractérisée en ce que** le récepteur de force (16) comprend une section finale se rétrécissent en section transversale.

8. Unité de filtre selon revendication 7,
**caractérisée en ce que** sur la section finale rétrécissent du récepteur de force (16) l'élément de fixation (18) peut être vissé.

9. Unité de filtre selon revendication 7 ou 8,
**caractérisée en ce qu'**à la transition de la section finale rétrécie à la partie restante du récepteur de force (16) est prévu un écoulement (17), lequel limite le chemin d'ajustement maximal de l'élément de fixation (14).

10. Elément de filtre avec un corps de filtre (1') et une tête (7) en forme de cadre, qui est connectée avec le corps de filtre (1') et comprend dans ses côtés (8, 9) de cadre opposés respectivement au moins un élément de liaison géométrique (10, 11),
**caractérisé en ce que** l'élément de liaison géométrique (10, 11) est formé par une cavité reliée périphériquement dans les côtés (8, 9) de cadre.

11. Elément de filtre selon revendication 10,
**caractérisé en ce que** l'élément de liaison géométrique (10, 11) comprend un contour angulaire.

12. Elément de filtre selon revendication 10 ou 11,
**caractérisé en ce que** la tête (7) comprend un côté frontal (24) incliné en biais.

13. Elément de filtre selon revendication 12,
**caractérisé en ce que** le côté frontal (24) est plat.

14. Elément de filtre selon une des revendications 10 à 13,
**caractérisé en ce que** l'épaisseur de la tête (7) se réduit en direction de son côté extérieur (23).
